# DEMANDE DE BREVET EUROPEEN

(11) **EP 2 680 602 A1**
(43) Date de publication de la demande: **01.01.2014**
(21) Numéro de dépôt: 13173919.5
(22) Date de dépôt: 27.06.2013
(51) Int. Cl.: H04N 21/472

(54) **Procédé de sélection d'un service numérique à restituer sur un écran**

(30) Priorité: 27.06.2012 FR 1256104
(71) Demandeur: Orange, 75015 Paris (FR)
(72) Inventeur: Vincent, Yoann, 94230 Cachan (FR); Galloyer, Jérôme, 93450 L'Ile Saint-Denis (FR)
(74) Mandataire: Regimbeau

(57) **Abrégé**

L'invention concerne un procédé de sélection d'un service numérique parmi un ensemble de services numériques disponibles, chaque service numérique correspondant à un flux de données reçu par un équipement utilisateur comprenant des moyens de restitution audio/vidéo, lesdits moyens de restitution comprenant un écran, l'équipement utilisateur étant connecté à un réseau de communication, un service numérique étant identifié par un éditeur et une catégorie. Un service peut être contextuel et/ou corrélé au flux numérique diffusé.

## Description

### DOMAINE TECHNIQUE GENERAL

La présente invention concerne le domaine de la réception, de la diffusion et de la restitution d'un flux de données numériques et plus particulièrement la gestion de la diffusion de flux de données numériques notamment audiovisuelles et de jeux.

### ETAT DE LA TECHNIQUE

Depuis l'apparition des téléphones intelligents (en anglais, « *Smartphone* » et l'introduction des applications, l'accès à l'information a été considérablement facilité.

Ainsi, les utilisateurs ont pris l'habitude de télécharger sur leur *Smartphone* des applications dédiées à leur besoin.

Sur un *Smartphone,* les applications liées à la télévision sont fournies soit par les opérateurs, qui agrègent l'accès au direct, un guide de programme télévisuel, des informations textuelles, des recommandations, des catalogues de vidéos à la demande et d'autres services, soit par les chaines de télévision qui proposent des services d'accès à la télévision en direct, des guides de programmes, des catalogues de vidéos à la demande (en anglais, « *Video on Demand* », (VoD), des informations textuelles, soit par des éditeurs de contenus, qui proposent des services liés aux programmes diffusés par les chaines de télévision de type recommandations, partage, réseaux sociaux...

Récemment un certain nombre d'acteurs, fabricants d'écran de télévision, propose des télévisions dites « télévisions connectées » intégrant un système d'exploitation, des applications et une connexion à un réseau de communication tel que l'Internet. On connait notamment la « Smart TV® » commercialisée par Samsung®.

En outre, certains décodeurs numériques (en anglais « *Set Top Box* », (STB)) distribués par des opérateurs de télécommunication proposent aussi des systèmes de catalogues d'applications accessibles sur un téléviseur connecté au décodeur numérique.

Sur un téléviseur intégrant des applications ou connecté à un décodeur intégrant des applications, l'utilisateur a ainsi accès d'un côté au monde de la télévision et de l'autre au monde des applications.

Ces deux mondes sont toutefois généralement décorrélés de sorte que l'accès aux chaines de télévision traditionnelle (ce que l'on attend avant tout d'une télévision) et l'accès aux applications ne sont pas ergonomiques rendant difficile la navigation dans l'offre proposée. En outre, dans le monde des applications, l'utilisateur est souvent confronté à des listes d'applications dans lesquelles il lui est difficile de se retrouver.

La présente invention vient améliorer la situation.

### PRESENTATION DE L'INVENTION

A cet effet, l'invention propose un procédé de sélection d'un service numérique parmi un ensemble de services numériques disponibles, chaque service numérique correspondant à un flux de données reçu par un équipement utilisateur comprenant des moyens de restitution audio/vidéo, lesdits moyens de restitution comprenant un écran, l'équipement utilisateur étant connecté à un réseau de communication, un service numérique étant identifié par un éditeur et une catégorie, le procédé comprenant les étapes suivantes :
- réception et restitution par les moyens de restitution de l'équipement utilisateur d'un flux de données d'un service numérique dit service numérique courant ;
- réception de données de navigation comprenant une liste de services numériques disponibles ;
- agrégation des données reçues et affichage sur l'écran d'une interface de navigation comprenant : une première zone de navigation comprenant une liste de plusieurs éditeurs de la même catégorie que celle du service numérique courant ; une deuxième zone de navigation comprenant une liste de plusieurs catégories ; une troisième de zone navigation comprenant une zone d'information contenant des informations sur le service numérique courant ;
- navigation dans l'interface de navigation par sélection(s) d'un éditeur ou d'une catégorie ;
- affichage dans la troisième zone de navigation d'une liste de services numériques ;
- sélection d'un service numérique dans la troisième zone de navigation ;
- réception et restitution par les moyens de restitution du flux de données correspondant au service numérique sélectionné.

Les avantages de l'invention sont multiples.

L'invention propose ainsi une solution ergonomique pour naviguer dans une interface télévisuelle permettant d'accéder à plusieurs services, y compris les programmes de télévision en cours.

Dans un mode de réalisation particulier, la troisième zone de navigation comprend le cas échéant une liste de plusieurs services de l'éditeur du service numérique courant.

Avantageusement, la navigation consiste à sélectionner un éditeur, le procédé comprenant alors un affichage dans la troisième zone d'une liste de plusieurs services numériques associés à l'éditeur sélectionné. De cette façon, l'utilisateur a accès à tous les services de l'éditeur sélectionné. Et avantageusement, après la sélection d'un éditeur, l'interface de navigation comprend uniquement la première zone de navigation et la troisième zone de navigation, la deuxième zone de navigation étant alors masquée.

Avantageusement, la navigation consiste à sélectionner une catégorie, le procédé comprenant alors un affichage dans la première zone de navigation d'une liste de plusieurs éditeurs associés à ladite catégorie sélectionnée. De cette façon, l'utilisateur a accès à tous les éditeurs de la catégorie sélectionnée.

Avantageusement, la première zone et la deuxième zone de navigation sont disposées dans un même bandeau disposé dans une zone latérale de l'écran d'affichage.

Avantageusement, la troisième zone est disposée dans une zone inférieure de l'écran d'affichage.

Ainsi, l'invention est fondée sur un mode de navigation habituel (c'est-à-dire l'affichage de zones de navigation) et l'utilisateur peut facilement zapper d'un service numérique à l'autre.

En outre, du fait de l'affichage des différentes zones de navigation, il est possible de naviguer très rapidement parmi les services numériques disponibles de télévision classiques, dans les services vidéo à la demande ou dans tous les autres services qui peuvent être proposés en sus d'une offre télévisuelle classique.

Enfin, il n'y a plus de séparation entre le mode de la télévision et celui des applications du fait des différents niveaux de navigation. Ceci apporte de la fluidité.

Avantageusement, après la sélection du service numérique, le procédé comprend un affichage à l'écran d'une interface de pré-visualisation comprenant une zone d'affichage du service numérique sélectionné, la zone d'affichage du service numérique sélectionné étant superposée au service numérique courant. De cette façon, l'utilisateur peut pré-visualisé un service avant de zapper vers ce dernier.

L'invention concerne également un équipement de réception et de restitution d'un service numérique, connecté à un réseau de communication comprenant :
- un premier module de réception apte à recevoir un flux de données correspondant à un service numérique dit service numérique courant ;
- des moyens de restitution audio et/ou vidéo comprenant un écran d'affichage et un dispositif de restitution sonore aptes à restituer le flux de données reçu ;
- un deuxième module de réception apte à recevoir des données de navigation comprenant une liste de services numériques disponibles ;
- un module de sélection d'un service numérique parmi un ensemble de services numériques disponibles, chaque service numérique correspondant à un flux de données, module de sélection étant adapté pour
   ○ agréger des données de navigation reçues et afficher sur l'écran une interface Z de navigation comprenant : une première zone de navigation comprenant une liste de plusieurs éditeurs de la même catégorie que celle du service numérique courant ; une deuxième zone de navigation comprenant une liste de plusieurs catégories ; une troisième de zone navigation comprenant une zone d'information contenant des informations sur le service numérique courant ;
   ○ naviguer dans l'interface de navigation par sélection(s) d'un éditeur ou d'une catégorie ;
   ○ afficher dans la troisième zone de navigation une liste de services numériques ;
   ○ sélectionner un service numérique dans la troisième zone de navigation.

L'invention concerne également un produit programme d'ordinateur sur un support de données comprenant des instructions logicielles pour commander l'exécution des étapes d'un procédé tel que précédemment défini, lorsque le programme d'ordinateur est exécuté par un ordinateur.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un ensemble de réception et de visualisation d'un service numérique selon un mode de réalisation particulier de l'invention ;
- la figures 2 illustre un équipement de réception et de restitution d'un service numérique selon un mode de réalisation de l'invention ;
- la figure 3 illustre un procédé de sélection conforme à un mode de réalisation de l'invention ;
- la figure 4 illustre un écran d'un équipement de réception et de restitution d'un service numérique comprenant une interface de navigation conforme à un mode de réalisation de l'invention ;
- la figure 5 illustre de manière détaillée un équipement de réception et de restitution d'un service numérique selon un mode de réalisation de l'invention. Sur l'ensemble des figures, les éléments similaires portent des références identiques.

### DESCRIPTION DETAILLEE DE L'INVENTION

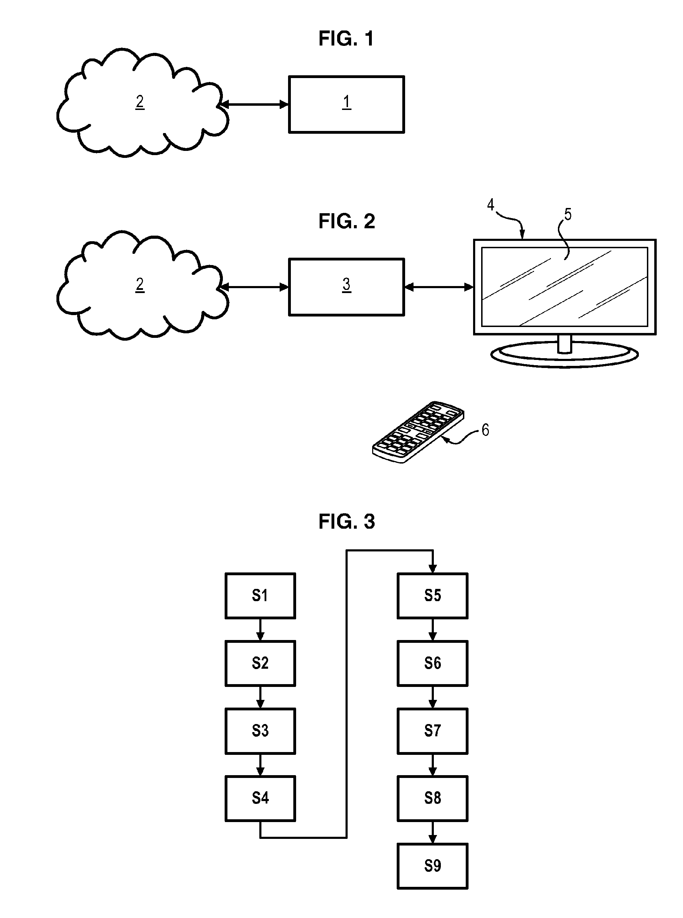

En relation avec la figure 1, un équipement 1 de réception et de restitution d'un service numérique audio/vidéo est connecté à un réseau de communication, ici l'Internet 2.

On entend par restitution d'un service numérique soit le fait de jouer un service audiovisuel sur un écran et à l'aide d'un dispositif de restitution sonore (haut-parleurs ou écouteurs) soit le fait de jouer un service audio, par exemple un service radio, à l'aide d'un dispositif de restitution sonore.

L'équipement 1 de réception peut être constitué d'un décodeur numérique 3 (en anglais, « *Set Top Box* », (STB)) connecté au réseau Internet 2, d'un téléviseur 4 comprenant des moyens de restitution comprenant ici un écran 5 d'affichage et des haut-parleurs (non représentés), et d'une télécommande 6 à infrarouge.

De manière alternative, l'équipement 1 de réception et de restitution peut être un terminal mobile de communication, par exemple un *Smartphone* comprenant des moyens de restitution tels qu'un écran tactile et des haut-parleurs ou une sortie audio de connexion pour des écouteurs (non représentés) ou une tablette comprenant également des moyens de restitution tels qu'un écran tactile ou encore des hauts parleurs (non représentés). Le terminal mobile de communication est connecté au réseau Internet 2 par l'intermédiaire d'un réseau radio, mobile (par exemple Edge, 3G, 3G+, 4G) ou local sans fil (par exemple Wi-Fi). Dans ce mode de réalisation, le décodeur numérique est intégré au terminal de communication.

En outre, l'équipement 1 de réception et de restitution peut être constitué par un ordinateur. Comme pour le terminal mobile, le décodeur numérique est intégré à l'ordinateur.

On entend par « service numérique audio/vidéo », un flux de données reçu et décodé par l'équipement 1 en vue d'être restitué par l'équipement 1. En d'autres termes, l'équipement permet la restitution d'un flux de données reçu par exemple via le broadcast DVB-T, DVB-S, l'IPTV, le streaming adaptatif ou bien de manière plus générale par toute méthode connue en soi.

L'équipement 1 comprend un module logiciel de sélection pour sélectionner un service numérique audio/vidéo parmi plusieurs services disponibles, apte à mettre en oeuvre le procédé de sélection décrit ci-après. Dans l'exemple particulier de réalisation décrit ici, le module logiciel de sélection est intégré dans le décodeur 3.

Ces services disponibles sont proposés par plusieurs éditeurs. Il peut s'agir d'une chaine de télévision, d'une station de radio, etc. En outre, les services disponibles sont classés par catégories. Un éditeur peut proposer différents services appartenant respectivement à différentes catégories.

De manière non limitative, les catégories peuvent être :
- Chaines de télévision ;
- Vidéos à la demande ;
- Musique ;
- Favoris (permet à l'utilisateur de définir ses éditeurs favoris) ;
- Vidéos.

Encore de manière non limitative, des services peuvent être :
- Chaine de télévision en direct : visualisation d'un programme de télévision diffusé par une chaîne de télévision ;
- Rediffusion à la demande (en anglais « *Replay* ») : un éditeur met à disposition des utilisateurs des programmes de télévisions qui ont déjà été diffusés ;
- Actualités : chaines de télévisions dédiées uniquement à l'actualité.

Les services disponibles sont accessibles par l'intermédiaire de la STB 3 en association avec la télécommande 6 ou par l'écran tactile dans le cas d'un terminal mobile de communication.

Pour que l'utilisateur puisse accéder à un service, l'équipement 1 permet l'affichage d'une interface de navigation via laquelle l'utilisateur peut sélectionner un service parmi plusieurs services disponibles. L'interface de navigation est gérée par le module de sélection du décodeur 3.

On a illustré sur la figure 3 un procédé pour sélectionner un service numérique parmi un ensemble de services numériques disponibles selon un mode de réalisation de l'invention.

Un tel procédé est de préférence mis en oeuvre par le décodeur numérique 3 comprenant à ce titre un processeur (non représenté) apte à exécuter le module logiciel de sélection.

Dans une première étape S1, un flux de données d'un service numérique est reçu par l'intermédiaire du réseau 2 de communication et est restitué S2 par le téléviseur 4 ou le *Smartphone* ou la tablette. Il s'agit du service numérique courant.

Suite à une action d'un utilisateur, par exemple par appui sur une touche spécifique de la télécommande 6, l'équipement 1 reçoit S3, par l'intermédiaire du réseau 2 de communication des données de navigation. Ces données comprennent notamment une liste de services numériques disponibles.

Ensuite, une fois les données de navigation reçues, ces données sont agrégées S4 afin de générer l'interface de navigation et l'affichage S5 à l'écran 5 de l'interface de navigation est déclenché. L'action peut être un appui sur une touche particulière de la télécommande 6 ou bien sur une zone précise de tout type d'écran.

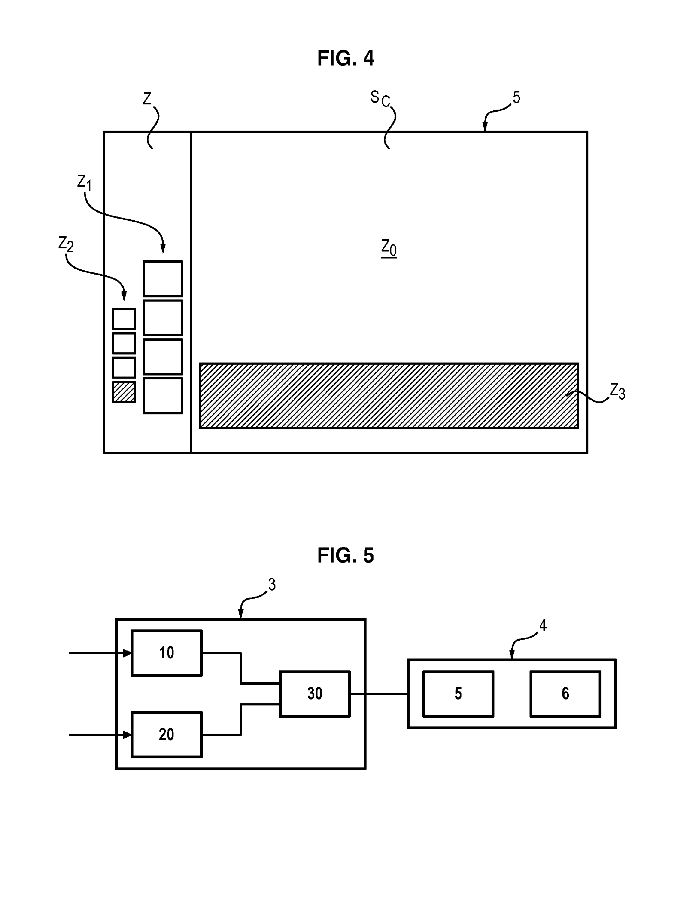

On a illustré sur la figure 4 une interface de navigation conforme à un mode de réalisation de l'invention affichée sur l'écran 5 de l'équipement 1.

L'interface de navigation comprend trois zones.

Une première zone Z1 de navigation comprend une liste de plusieurs éditeurs de la même catégorie que celle du service numérique courant. Si le service courant est une chaine de télévision, la liste des éditeurs comprend plusieurs chaines de télévision.

Une deuxième zone Z2 de navigation comprend une liste de plusieurs catégories.

Une troisième zone Z3 de navigation comprend une zone d'information contenant des informations sur le service numérique courant et, le cas échéant, une liste de plusieurs services de l'éditeur du service numérique courant.

Comme illustré sur la figure 4, le service numérique SC courant occupe la majeure partie de l'écran, les première et deuxième zones sont disposées dans une partie latérale de l'écran et la troisième zone est disposée dans la partie inférieure de l'écran 5. Dans un mode de réalisation particulier, les première et deuxième zones sont disposées dans un même bandeau.

Le flux principal correspondant au service courant SC s'étend dans une zone Z0 occupant la totalité ou au moins la majeure partie de l'écran.

Si le service courant est un programme d'une chaine de télévision, la zone d'information de la troisième zone de navigation Z3 comprend un descriptif du programme (durée, résumé, etc. par exemple).

Si le service courant est une vidéo à la demande, la zone d'information de la troisième zone de navigation Z3 comprend des informations sur l'avancement dans la vidéo ainsi que l'état de la lecture (lecture, pause, retour rapide arrière, etc.).

L'interface de navigation se compose donc de trois niveaux ce qui permet une grande fluidité dans la navigation :
- le niveau N correspond aux éditeurs (première zone Z1) ;
- le niveau N-1 correspond aux catégories (deuxième zone Z2) ;
- le niveau N+1 correspond aux services (troisième zone Z3).

Suite à l'affichage de l'interface de navigation, l'utilisateur peut naviguer S6 dans l'interface en se déplaçant dans l'interface et en sélectionnant des éléments des listes affichées dans les zones de navigation.

Suite à une sélection d'un service dans la troisième zone Z3 de navigation, l'utilisateur peut pré visualiser le contenu de chaque service dans la troisième zone Z3. Cette zone peut être personnalisée en fonction du service sélectionné.

La navigation peut se faire au moyen de la télécommande via les touches Haut, Bas, Droite, Gauche, OK (validation, entrée dans une catégorie/éditeur/service, etc.), Back (sortie de la liste des éditeurs/service), Menu (affichage de l'interface).

De manière alternative, dans le cas d'un écran tactile, la navigation peut se faire directement en touchant l'écran.

Dans le cas d'une interface non tactile, la navigation peut se faire via le déplacement ou le positionnement d'un curseur et un pavé de navigation de la télécommande -6.

Encore de manière alternative, la navigation peut se faire via un dispositif à reconnaissance vocale (non représenté) connecté au téléviseur ou via un dispositif de reconnaissance du mouvement (non représenté).

La navigation dans l'interface de navigation consiste à sélectionner un éditeur, une catégorie pour sélectionner un service numérique.

Dans le cas où la navigation S6 consiste à sélectionner un éditeur dans la première zone de navigation Z1, on affiche dans la troisième zone Z3 une liste de plusieurs services numériques associés à l'éditeur sélectionné. De manière alternative ou complémentaire, après la sélection d'un éditeur, on peut masquer la deuxième zone Z2 de navigation pour que l'interface de navigation ne comprenne que la première zone Z1 de navigation et la troisième zone Z3 de navigation.

Dans le cas où la navigation S6 consiste à sélectionner une catégorie dans la deuxième zone de navigation Z2, le procédé comprend un affichage dans la première zone Z1 de navigation, d'une liste de plusieurs éditeurs associés à la catégorie sélectionnée.

Enfin, on sélectionne S7 un service numérique pour alors déclencher la réception S8 et l'affichage S9 à l'écran 5 du service numérique sélectionné.

De manière alternative ou complémentaire, le procédé de sélection comprend l'affichage à l'écran 5 d'une interface de pré-visualisation. L'affichage de cette interface de pré-visualisation est déclenché à la suite de la sélection d'un service numérique. Cette interface de pré-visualisation se superpose au service numérique courant.

En relation avec la figure 5 on décrit plus en détail l'équipement 1 de réception et de restitution d'un service numérique.

L'équipement 1 de réception et de restitution d'un service numérique, connecté à un réseau de communication, en l'espèce l'Internet 2, comprend :
- un premier module 10 de réception apte à recevoir un flux de données correspondant à un service numérique dit service numérique courant ;
- des moyens 4 de restitution audio et/ou vidéo comprenant un écran 5 d'affichage et un dispositif 6 de restitution sonore (haut-parleurs et/ou sortie audio pour écouteurs) aptes à restituer le flux de données reçu ;
- un deuxième module 20 de réception apte à recevoir des données de navigation comprenant une liste de services numériques disponibles ;
- un module 30 de sélection d'un service numérique parmi un ensemble de services numériques disponibles, chaque service numérique correspondant à un flux de données, module 30 de sélection étant adapté pour
   ○ agréger des données de navigation reçues et afficher (c'est-à-dire commander l'affichage) sur l'écran une interface Z de navigation comprenant : une première zone Z1 de navigation comprenant une liste de plusieurs éditeurs de la même catégorie que celle du service numérique courant ; une deuxième zone Z2 de navigation comprenant une liste de plusieurs catégories ; une troisième de zone Z3 navigation comprenant une zone d'information contenant des informations sur le service numérique courant et le cas échéant une liste de plusieurs services de l'éditeur du service numérique courant ;
   ○ naviguer dans l'interface de navigation par sélection(s) d'un éditeur ou d'une catégorie afin d'afficher dans la troisième zone de navigation une liste de services numériques ;
   ○ sélectionner un service numérique parmi ceux affichés dans l'interface de navigation.

Le module 30 de sélection est adapté pour mettre en oeuvre les étapes S4, S5, S6 et S7 précédemment décrites. Il s'agit d'un module logiciel comprenant des instructions logicielles destinées à être exécutées par un processeur de l'équipement 1 afin de commander l'exécution de ces étapes. Comme mentionné précédemment, le processeur destiné à exécuter le module de sélection est un processeur du décodeur 3 numérique de l'équipement 1.

Par conséquent, l'invention concerne également un produit programme d'ordinateur pour un équipement 1 de réception et de restitution d'un service numérique comprenant des instructions logicielles pour commander l'exécution des étapes du procédé précédemment décrit lorsque le programme est exécuté par un processeur de l'équipement 1 de réception et de restitution d'un service numérique.

De manière avantageuse, le programme est stocké sur un support de données tel qu'un CD-ROM un support USB, un disque dur, etc.

## Revendications

1. Procédé de sélection d'un service numérique parmi un ensemble de services numériques disponibles, chaque service numérique correspondant à un flux de données reçu par un équipement (1) comprenant des moyens (4) de restitution audio/vidéo, lesdits moyens de restitution comprenant un écran (5), l'équipement utilisateur (1) étant connecté à un réseau de communication (2), un service numérique étant identifié par un éditeur et une catégorie, le procédé comprenant les étapes suivantes :
- réception (S1) et restitution (S2) par les moyens de restitution (4) de l'équipement utilisateur (1) d'un flux de données d'un service numérique dit service numérique courant ;
- réception (S3) de données de navigation comprenant une liste de services numériques disponibles ;
- agrégation (S4) des données reçues et affichage (S5) sur l'écran d'une interface (Z) de navigation comprenant : une première zone (Z1) de navigation comprenant une liste de plusieurs éditeurs de la même catégorie que celle du service numérique courant ; une deuxième zone (Z2) de navigation comprenant une liste de plusieurs catégories ; une troisième zone (Z3) de navigation comprenant une zone d'information contenant des informations sur le service numérique courant ;
- navigation (S6) dans l'interface de navigation par sélection(s) d'un éditeur ou d'une catégorie ;
- affichage dans la troisième zone de navigation d'une liste de services numériques ;
- sélection (S7) d'un service numérique dans la troisième zone de navigation ;
- réception (S8) et restitution (S9) par les moyens de restitution (5) du flux de données correspondant au service numérique sélectionné.

2. Procédé de sélection selon la revendication 1, dans lequel la navigation (S6) consiste à sélectionner un éditeur, le procédé comprenant alors un affichage dans la troisième zone (Z3) d'une liste de plusieurs services numériques associés à l'éditeur sélectionné.

3. Procédé de sélection selon la revendication précédente, dans lequel après la sélection d'un éditeur, l'interface de navigation comprend uniquement la première zone (Z1) de navigation et la troisième zone (Z3) de navigation, la deuxième zone (Z2) de navigation étant alors masquée.

4. Procédé de sélection selon l'une des revendications précédentes, dans lequel la navigation (S6) consiste à sélectionner une catégorie, le procédé comprenant alors un affichage dans la première zone (Z1) de navigation d'une liste de plusieurs éditeurs associés à ladite catégorie sélectionnée.

5. Procédé de sélection selon l'une des revendications précédentes, dans lequel la première zone et la deuxième zone de navigation sont disposées dans un même bandeau (Z) disposé dans une zone latérale de l'écran d'affichage.

6. Procédé de sélection selon l'une des revendications précédentes, dans lequel la troisième zone est disposée dans une zone inférieure de l'écran d'affichage.

7. Procédé de sélection selon l'une des revendications précédentes, dans lequel après la sélection du service numérique, le procédé comprend un affichage à l'écran (5) d'une interface de pré-visualisation comprenant une zone d'affichage du service numérique sélectionné, la zone d'affichage du service numérique sélectionné étant superposée au service numérique courant.

8. Equipement de réception et de restitution d'un service numérique, connecté à un réseau de communication (2) comprenant :
- un premier (10) module de réception apte à recevoir un flux de données correspondant à un service numérique dit service numérique courant ;
- des moyens (4) de restitution audio et/ou vidéo comprenant un écran d'affichage aptes à restituer le flux de données reçu et;
- un deuxième module de réception apte à recevoir des données de navigation comprenant une liste de services numériques disponibles ;
- un module de sélection d'un service numérique parmi un ensemble de services numériques disponibles, chaque service numérique correspondant à un flux de données, adapté pour
○ agréger (S4) des données de navigation reçues et afficher (S5) sur l'écran une interface (Z) de navigation comprenant : une première zone (Z1) de navigation comprenant une liste de plusieurs éditeurs de la même catégorie que celle du service numérique courant ; une deuxième zone (Z2) de navigation comprenant une liste de plusieurs catégories ; une troisième de zone (Z3) navigation comprenant une zone d'information contenant des informations sur le service numérique courant ;
○ naviguer (S6) dans l'interface de navigation par sélection(s) d'un éditeur ou d'une catégorie
○ afficher dans la troisième zone de navigation une liste de services numériques ;
○ sélectionner (S7) un service numérique dans la troisième zone de navigation.

9. Produit programme d'ordinateur sur un support de données comprenant des instructions logicielles pour commander l'exécution des étapes d'un procédé selon l'une des revendications 1 à 7, lorsque le programme d'ordinateur est exécuté par un ordinateur.
